# FASCICULE DE BREVET EUROPEEN

(11) **EP 0 506 522 B1**
(45) Date de publication et mention de la délivrance du brevet: **15.05.1996**
(21) Numéro de dépôt: 92400733.9
(22) Date de dépôt: 19.03.1992
(51) Int. Cl.: E06B 3/54, E04F 13/08

(54) **Système de fixation**
Befestigungssystem
Mounting system

(30) Priorité: 29.03.1991 FR 9103836
(43) Date de publication de la demande: 30.09.1992
(73) Titulaire: SAINT-GOBAIN VITRAGE, F-92400 Courbevoie (FR)
(72) Inventeur: Demars, Yves, F-60600 Clermont (FR); Poix, René, F-60400 Noyon (FR)
(74) Mandataire: Muller, René

(56) Documents cités:
- EP-A- 0 192 472
- EP-A- 0 340 089
- DE-A- 1 784 811
- US-A- 4 749 898
- US-A- 4 893 443

## Description

L'invention concerne un système de liason d'une plaque de verre destinée à être fixée sur une structure porteuse. Elle concerne aussi la liaison entre la plaque et autres plaques associées de manière, notamment, à constituer des vitrages isolants. L'invention étudie plus précisément les moyens de réglage de la position de ladite plaque de verre dans son propre plan.

Dans le cadre de l'invention, la plaque de verre est fixée sur la structure par la technique dite "structural glazing", qui prévoit de fixer la plaque non pas sur son pourtour mais par des points d'accrochage mécanique situés par exemple à proximité de chacun des coins de ladite plaque.

Ceci permet notamment d'obtenir une façade de bâtiment entièrement constituée de plaques de verre, les unes opaques appelées allèges, les autres transparentes pour jouer le rôle de vitrage soit monolithique, soit multiple. La façade présente alors un minimum de discontinuité de surface, vue de l'extérieur. Les brevets EP-A-192 472 et EP-A-340 089 décrivent par exemple cette technique.

Lorsqu'il s'agit de vitrages, on leur confère usuellement des propriétés d'isolation thermique par association d'au moins deux substrats par l'intermédiaire d'une lame de gaz dont l'étanchéité est assurée par un joint périphérique de manière connue.

Chacun des substrats peut être une plaque de verre unitaire ou présenter une structure feuilletée par association de deux plaques de verre par une feuille de polymère intercalaire.

Mais il est à noter que la technique habituelle de "structural glazing" implique, dans le cas d'un tel vitrage multiple, qu'en général, un seul des substrats soit uni à la structure porteuse par un système de fixation, ce qui soulève un point particulièrement épineux : En effet, cela signifie que les autres substrats qui sont associés à ce substrat fixé risquent, ne serait-ce que sous l'effet de leur propre poids, de soumettre les joints périphériques précédemment évoqués à rude épreuve, car ceux-ci, ne garantissant que l'étanchéité de l'ensemble, ne sont absolument pas étudiés pour résister à de fortes contraintes en cisaillement.

Il est donc important, dans le cas de vitrages multiples, de prévoir des liaisons entre les substrats permettant d'alléger ces contraintes au niveau des joints, lesdites liaisons ayant alors pour objet de reporter au moins une partie du poids de chaque substrat non fixé à la structure sur le substrat qui y est fixé.

D'autre part, que la plaque de verre à fixer sur la structure porteuse soit monolithique ou fasse partie d'un vitrage, il faut assurer une liaison transversale correcte entre la plaque et la structure.

Finalement, dans un cas comme dans l'autre, que la liaison de la plaque de verre doive être assurée uniquement avec une structure porteuse ou également avec une autre plaque de verre, son but fondamental est de maintenir la cohésion de l'ensemble en permettant de supporter le poids de ladite plaque.

Les auteurs de la présente invention se sont alors attachés à résoudre le problème du positionnement de cette plaque dans son propre plan par rapport à l'élément auquel elle doit être reliée, c'est-à-dire la structure porteuse ou la structure porteuse et une autre plaque, cette liaison ayant pour but de transférer au moins une partie du poids de ladite plaque sur ledit élément.

La demande de brevet EP-A-192 472 décrit différents systèmes de fixation mécanique d'un double vitrage sur une structure, lesdits systèmes permettant, par simple vissage, de serrer l'un ou l'autre des deux substrats sur la structure. Il n'y a donc pas de liaison spécifique des substrats sur la structure. Il n'y a donc pas de liaison spécifique des substrats entre eux qui pourrait s'opposer à une tendance au glissement longitudinal du substrat non fixé par rapport à l'autre, glissement sollicitant dangereusement leur joint périphérique. De plus, sur un plan pratique, la mise en place des fixations peut se révéler malaisée si les pièces métalliques permettant le vissage ne sont pas parfaitement centrées par rapport à chacun des trous aménagés dans les substrats qu'elles traversent. Or, industriellement, chaque plaque de verre est percée indépendamment avant son assemblage et il est difficile d'assurer systématiquement un centrage parfait entre les trous d'une part, et donc entre chacun des trous et les pièces de fixation d'autre part.

Le brevet EP-A-340 089 décrit quant à lui la fixation mécanique d'un vitrage feuilleté sur une structure, également par vissage, de manière à ce que seule la feuille de verre intérieure soit traversée par une vis se terminant par une rondelle d'une part s'appuyant sur la périphérie du trou de ladite feuille, et d'autre part collée sur la feuille intercalaire de polymère. De cette manière, on assure effectivement à la fois la fixation de la feuille intérieure sur la structure porteuse et la fixation longitudinale des deux feuilles de verre du feuilleté. On évite de plus tout affleurement peu esthétique de pièces de fixation à la surface de la feuille de verre extérieure. Cependant, ce vissage implique qu'il n'y a pas de jeu possible transversalement entre les deux feuilles de verre et la structure, ce qui peut être souhaitable si l'on prend en compte des conditions atmosphériques tels qu'un fort vent oblique. Dans le cas du double vitrage, il n'est pas prévu en outre de liaison entre le feuilleté fixé à la structure et l'autre substrat.

Il est par ailleurs connu de la demande de brevet DE-1784 811 un système de liaison mécanique entre une structure porteuse et des plaques constitutives de façade qui comporte un système d'excentrique constitué d'une bague excentrée placée hors de la plaque que l'on peut animer d'un mouvement de rotation, à l'aide d'un petit levier, dans un orifice prévu dans le système de liaison.

Le but de l'invention est donc d'obvier ces inconvénients en répondant au problème de positionnement précédemment évoqué.

Selon l'invention, il est prévu d'avoir un système de liaison entre une plaque verticale d'un bâtiment et la structure porteuse, tel que la position de la plaque dans son plan par rapport à la structure soit réglable dans toutes les directions. Dans le cas où une ou plusieurs autres plaques sont associées à la première, le système est fixé rigidement à au moins l'une des plaques et sa position par rapport à au moins l'une des plaques est réglable dans le plan de celle-ci. Pour ce faire, la position du système de liaison par rapport à la ou aux plaques est réglée par un système d'excentriques, celui-ci comporte deux bagues circulaires excentrées disposées l'une dans l'autre dans chaque trou circulaire de fixation percé dans la plaque par rapport à laquelle on effectue le réglage.

Lorsque les plaques constituent un vitrage multiple notamment double, alors les trous circulaires sont préalablement étanchéifiés. Dans ce cas, les trous prévus dans les plaques successives ont un diamètre croissant de l'extérieur vers l'intérieur.

Un des modes de réalisation préférées de l'invention comporte une vis traversant la plaque extérieure à laquelle elle est fixée rigidement par un écrou dont le diamètre est au plus égal au diamètre du trou de la plaque intérieure, cet écrou supportant la plaque intérieure grâce à deux bagues circulaires excentrées, le serrage s'effectuant par un contre-écrou s'appuyant sur l'anneau d'étanchéité ; dans une variante, la vis est munie d'une tête fraisée dans la surface extérieure est sensiblement au même niveau que la surface extérieure de la plaque extérieure.

Dans un autre mode de réalisation le système de liaison comporte une pièce interne segmentée en plusieurs parties longitudinalement qui, lorsqu'elles sont jointives, ont un encombrement extérieur au plus égal à la taille du trou de la plaque intérieure permettant leur introduction entre les deux plaques et qui sont ensuite écartées les unes des autres et maintenues dans cette position par un écarteur, puis réglées par rapport à la plaque intérieure et enfin serrées par rapport à cette même plaque par une pièce externe. Dans une variante, la pièce interne comprend deux parties qui, en position écartée, sont de révolution du côté intérieur du bâtiment et sont équipées d'un pas de vis sur lequel se visse la pièce extérieure constituée d'un écrou, l'écarteur étant lui-même de forme cylindrique et s'engageant de plus, sans jeu, dans un trou ménagé dans la plaque extérieure. Dans le cas où la plaque extérieure présente une structure feuilletée, le trou ménagé dans celle-ci n'est percé que dans la feuille de verre intérieure et la feuille de polymère intercalaire.

L'invention porte également sur les vitrages équipés du système décrit ci-dessus particulièrement lorsque les différentes plaques qui le constituent sont solidarisées avec une structure porteuse de bâtiment de façon rigide dans toutes les directions contenues dans un plan parallèle au vitrage et/ou qu'elles le sont de façon à autoriser un débattement dans des directions perpendiculaires au vitrage.

Les caractéristiques avantageuses de l'invention apparaîtront clairement ci-après avec différents exemples de réalisation illustrés par les figures suivantes qui représentent :

Fig. 1 : une vue de l'extérieur d'une façade équipée de vitrages accrochés à la structure par un premier mode de réalisation d'une liaison mécanique.

Fig. 2 : une coupe transversale d'un des vitrages selon la figure 1 après son assemblage et avant la pose des liaisons mécaniques.

Fig. 3 : la même coupe qu'en figure 2, mais centrée au niveau d'un point d'accrochage après la pose de la liaison mécanique.

Fig. 4 : une vue de dessus des organes de réglage de la liaison mécanique de la figure 2.

Fig. 5 : une coupe transversale d'un autre vitrage centrée au niveau d'un point d'accrochage après la pose de la liaison mécanique selon un deuxième mode de réalisation de l'invention.

Fig. 6 : un schéma des étapes de montage de la liaison mécanique de la figure 5.

On précise que les proportions respectives ne sont pas rigoureusement respectées afin de faciliter la lecture des schémas.

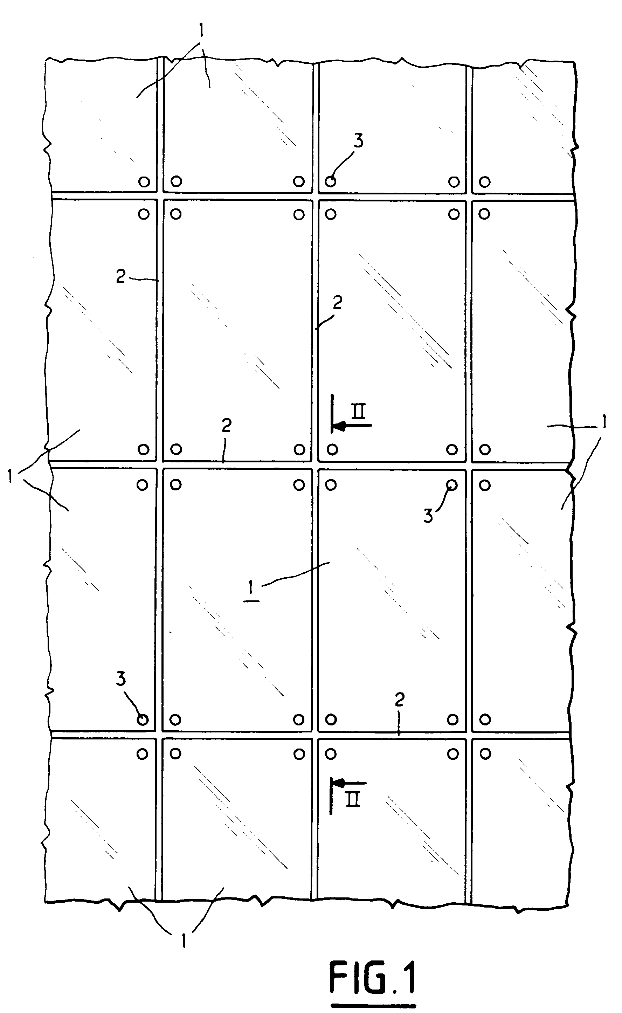

La figure 1 représente une vue partielle d'une façade constituée de vitrages 1 séparés par des joints 2 de faible largeur, chacun des vitrages 1 étant fixé mécaniquement à la structure porteuse à ses quatre coins par des points d'accrochage 3 de manière à ce que la surface extérieure ne présente globalement aucun élément débordant. Des endroits de fixation autres que situés dans le coin sont également possibles.

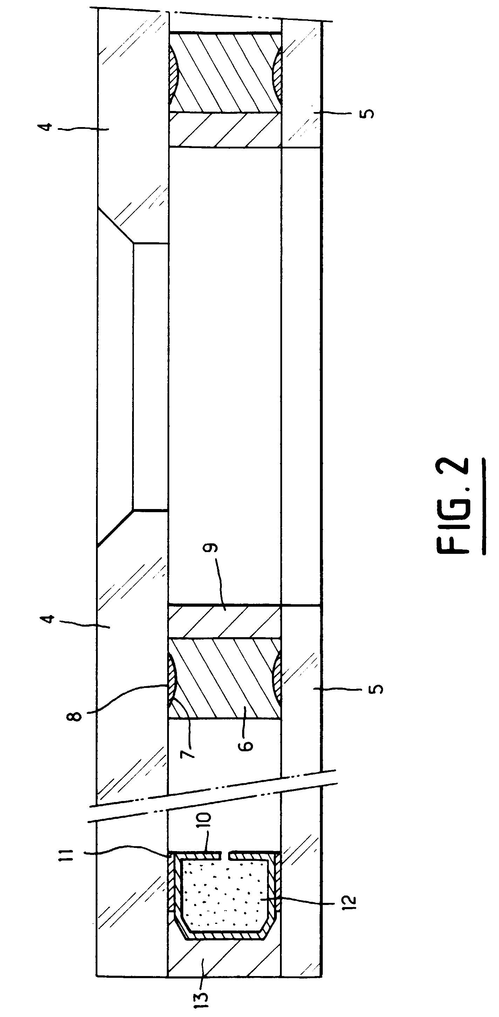

La figure 2 va permettre d'expliciter l'assemblage de chacun des vitrages 1, préalablement à l'installation des liaisons mécaniques, par une coupe transversale selon l'axe II de la figure 1 centrée sur le bord du vitrage.

Il s'agit d'un double vitrage, constitué de deux substrats 4, 5, en verre et monolithiques, l'un 4 désigné comme substrat extérieur, l'autre, 5, désigné comme substrat intérieur en fonction de leur situation ultérieure une fois mis en place sur une façade de bâtiment.

Chacun d'entre eux est percé préalablement et indépendamment d'un trou puis trempé. Le trou dans le substrat extérieur 4 est plus petit que dans le substrat intérieur 5.

On procède ensuite à l'assemblage en séparant les deux substrats par une lame de gaz ou d'air au moyen d'un cadre espaceur périphérique 10 muni de desséchant 12 à l'intérieur de celui-ci et de deux joints de caoutchouc butyl 11 sur chacune de ses faces adjacentes auxdits substrats. On ajoute de surcroît un joint extérieur 13 en une matière du type polysulfure ou de préférence en silicone, l'ensemble 10, 11, 12, 13 garantissant alors l'étanchéité du vitrage à sa périphérie. D'autres types de vitrages multiples à joint exclusivement à base de polymères sans intercalaires métalliques peuvent également être utilisés.

Mais ici, il est également nécessaire de pourvoir à l'étanchéification au niveau des deux trous qui sont disposés en vis-à-vis lors de l'assemblage. Cette étanchéification est obtenue en disposant entre les deux substrats 4, 5 pendant l'assemblage un anneau 6 par exemple en polyamide muni sur chacune de ses faces de rigoles 7 emplies d'un joint 8 par exemple en caoutchouc butyl qui reste plastique puis est enduit sur toute sa surface intérieure d'un joint 9 annulaire en matière du type silicone ou polysulfure. Ledit joint 9 a, dans ce mode de réalisation, un périmètre intérieur au moins égal au périmètre du plus grand des deux trous.

On garantit ainsi l'étanchéité complète du vitrage dès le stade d'assemblage, indépendamment du système de fixation indiqué à la figure suivante tout en gardant à la technique de fabrication du vitrage isolant sa simplicité. Ainsi, très avantageusement, on peut aisément procéder au positionnement des pièces mécaniques de la fixation dans une phase ultérieure, notamment lors de la pose du vitrage sur le chantier ; ce qui peut se révéler extrêmement pratique, ne serait-ce que pour le transport des vitrages jusqu'au chantier.

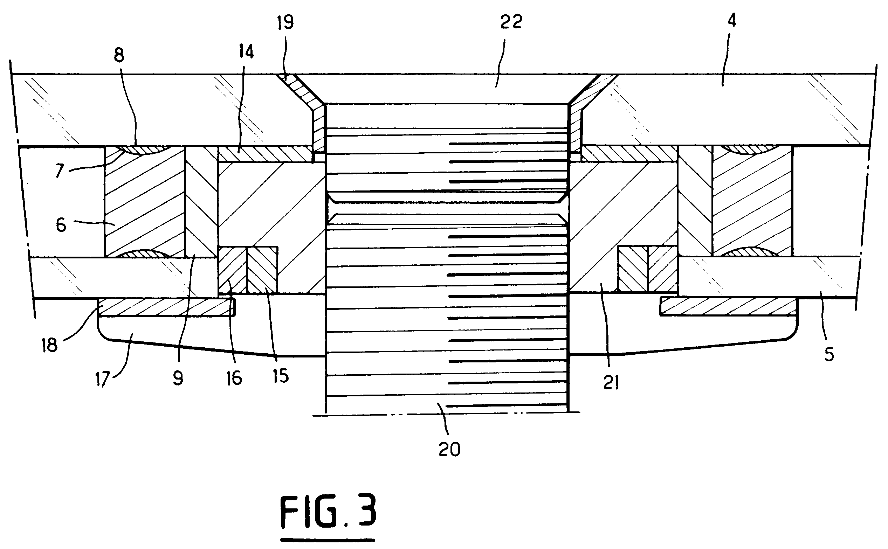

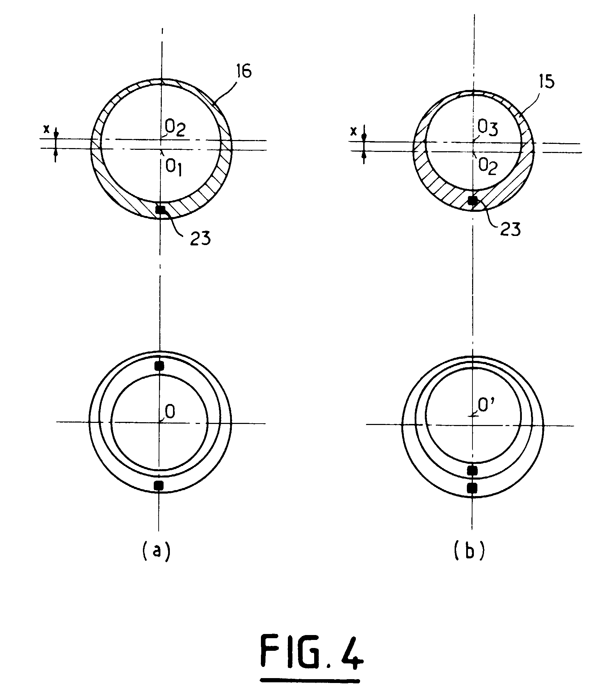

La figure 3 représente la même coupe transversale, une fois la fixation mécanique installée. La pose se fait de la manière suivante : on place une vis notamment en inox 22 dont la tête est entourée d'un collet 19 ex nylon dans le plus petit trou fraisé du substrat extérieur 4, de manière à ce qu'elle affleure juste à la surface dudit substrat. On visse sur cette pièce 22 un écrou 21 métallique en contact avec le substrat extérieur 4 par l'intermédiaire d'une rondelle en nylon 14. Le diamètre extérieur de la pièce cylindrique en forme d'écrou 21 est tel qu'il passe juste dans le trou du substrat intérieur 5, il présente un épaulement permettant de glisser entre cet épaulement et la périphérie du trou du substrat 5 un ensemble de deux bagues 15, 16 en nylon glissées l'une dans l'autre, et représentées en figure 4 en vue de dessus. Le périmètre extérieur de la bague la plus grande 16 est égal au périmètre du trou du substrat intérieur 5, son périmètre intérieur est égal au périmètre extérieur de la bague la plus petite 15, dont le périmètre intérieur correspond à celui de l'écrou 21 dans sa partie rétrécie par l'épaulement.

La figure 4 montre d'abord chacune des bagues séparément, munies de repères 23. On voit que les excentricités x des deux cercles délimitant chacune des bagues 15, 16, sont identiques. Ainsi, en faisant glisser en rotation une des bagues par rapport à l'autre, on déplace le périmètre intérieur de la petite bague 15 par rapport au périmètre extérieur de la grande bague 16. Ceci permet très avantageusement de rectifier le centrage de l'écrou 21 par rapport au trou du substrat intérieur 5. De cette manière, on "rattrape" en quelque sorte l'éventuel décentrage des trous de chacun des substrats 4, 5, l'un par rapport à l'autre, qui n'est pas rare dans la mesure où chaque substrat est percé séparément préalablement à la trempe et à l'assemblage.

L'opération manuelle d'ajustage de la position relative des deux bagues 15, 16 est très simple, et encore facilitée par la présence sur une face de chacune des bagues, d'un repère 23, notamment de petits évidements indiquant l'endroit où chaque bague présente sa largeur la plus grande qui facilitent la mise en place d'une clé spéciale prévue pour faire tourner les deux bagues l'une par rapport à l'autre.

Lorsque les repères 23 sont à 180° l'un de l'autre, comme dans le schéma (a), on a le cas idéal d'un parfait centrage entre le périmètre intérieur de la bague 15 et le périmètre extérieur de la bague 16.

Lorsqu'au contraire, comme sur le schéma (b), les deux repères coïncident, ou tout au moins ne sont plus à 180° l'un de l'autre, l'excentricité est plus ou moins prononcée.

Dès que la position relative des deux bagues 15, 16 est sélectionnée par l'opérateur au cas par cas de manière à ce que l'écrou se positionne correctement par rapport aux deux trous, on visse dans l'écrou 21 une tige filetée 20 de diamètre et de pas identique à ceux de la vis 22. Cette tige servira à fixer l'ensemble du vitrage à la structure. Pour terminer l'assemblage du vitrage, il suffit de visser sur la tige filetée 20 qui dépasse hors du substrat intérieur 5 un contre-écrou 17 qui vient s'appuyer contre l'écrou 21 et les deux bagues 15, 16 et contre le substrat intérieur 5 par l'intermédiaire d'une rondelle souple 18.

Il est en effet souhaitable que les pièces métalliques ne soient pas en contact direct avec le verre. Dans le cas où celles-ci seraient en matière plastique, ces joints d'interfaces 19, 14, 18 ne sont plus nécessaires.

Ce type de fixation assure donc à la fois une liaison longitudinale des deux substrats, traversés tous les deux par des pièces mécaniques, lesdites pièces assurent également la fixation transversale de l'ensemble du vitrage par le substrat extérieur 4 à la structure porteuse non représentée. De cette manière, en reportant le poids du substrat intérieur 5 sur le substrat extérieur 4, on soulage le joint périphérique 10, 11, 12, 13 de sollicitations en cisaillement néfastes.

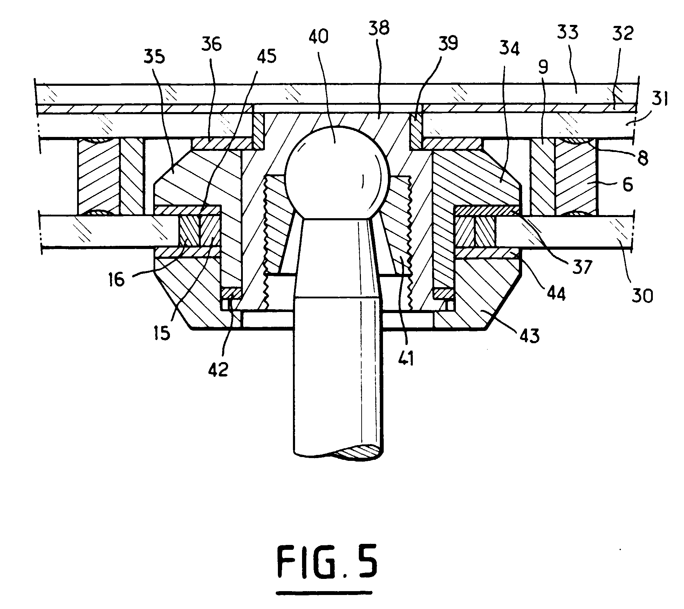

Un autre mode de réalisation selon l'invention est représenté en figure 5, qui est une coupe transversale d'un autre vitrage, centrée tout comme la figure 3 au niveau d'un point d'accrochage. La figure représente la fixation déjà en place.

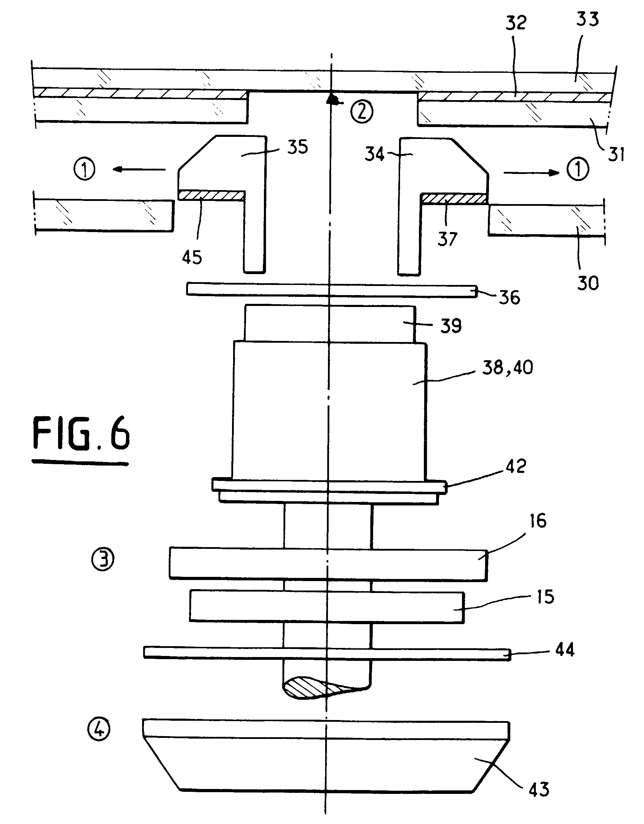

La figure 6 permettra de mieux faire comprendre la manière dont on procède lors de l'installation de cette fixation conformément à la figure 5.

Il s'agit ici d'un double vitrage constitué d'un substrat intérieur 30 qui est une plaque de verre monolithique et d'un substrat extérieur feuilleté comportant deux plaques de verre 31, 33 associées par une feuille de polyvinylbutyral 32.

Seuls sont percés le substrat intérieur 30, ainsi que la plaque de verre interne 31 et la feuille du polymère 32 du substrat extérieur. Comme précédemment, lors de l'assemblage des deux substrats, on assure l'étanchéité à la périphérie du vitrage par un joint ici non représenté, et également au niveau desdits trous par le même système d'anneau 6 muni de joints de caoutchouc butyl 8 dans ses rigoles 7 de chacune de ses faces et enduit d'un joint 9 en silicone ou polysulfure.

L'assemblage va être maintenant explicité à l'aide de la figure 6 : on introduit tout d'abord entre les deux substrats une pièce interne, qui est ici constituée d'une vis creuse coupée longitudinalement en deux parties 34, 35 qui, lorsqu'elles sont jointives ou tout au moins rapprochées l'une de l'autre, ont un encombrement global suffisamment petit pour pouvoir passer par le trou percé dans le substrat intérieur 30.

On prévoit également de munir cette vis de deux joints segmentés 37, 45 s'adaptant chacun à la base de la tête de chacune des deux parties 34, 35.

Une fois engagées, les deux parties 34, 35 sont ensuite écartées manuellement l'une de l'autre comme le montre la figure 6, puis ensuite maintenues en position par un écarteur 38 de forme générale extérieure cylindrique s'adaptant à la forme intérieure de la vis en position écartée. On garantit le blocage en rotation des deux parties 34, 35 par la présente de quatre ergots sur l'écarteur 38. Celui-ci présente un joint 42 à sa base et un autre joint 36, un rétrécissement également de forme cylindrique muni d'une bague 39, ce rétrécissement s'engage ainsi sans jeu dans le trou percé dans les feuilles 31 et 32 et il est de longueur telle que tout contact entre le fond du trou du substrat extérieur (en verre) et l'écarteur 38 (usuellement métallique) soit évité.

Cet écarteur 38 comme décrit dans la figure 5 possède une cavité hémisphérique qui permet de loger la tête d'une rotule 40 fixée à sa base par une pièce 41 extérieurement cylindrique et munie d'un pas de vis, ladite pièce 41 étant vissée à l'intérieur de l'écarteur 38 muni à ce niveau d'un filetage correspondant.

La position la plus favorable de cette rotule, est telle que son centre coïncide approximativement avec la "fibre neutre" du double-vitrage représenté en figure 5. Cette "fibre neutre" est habituellement la zone d'annulation des contraintes de compression-extension d'une plaque. Cependant, si la détermination de cette fibre neutre est aisée dans le cas d'un vitrage à un seul substrat de verre, en monolithique, elle s'avère beaucoup plus délicate lorsque plusieurs substrats sont assemblés en double-vitrage, feuilleté de surcroît. C'est pour cette raison que l'on préfère, dans le cadre de l'invention, disposer la rotule de manière à ce que son centre soit situé approximativement dans le plan de symétrie de l'espace intermédiaire entre la plaque intérieure 30 et extérieure (31, 32, 33). Cela permet, sur le plan industriel, de standardiser cette pièce et sa disposition, en se contentant, selon l'épaisseur de chacune des plaques, d'adapter la hauteur du pas de vis et de la taille de l'écrou, ce qui est une simplification de fabrication des pièces tout à fait intéressante.

On ajuste ensuite la position de la vis 34, 35 en position écartée par rapport au trou du substrat 30 par le système des deux bagues circulaires excentriques 15, 16 selon le même principe que dans le mode de réalisation précédent.

On serre ensuite la vis 34, 35 contre le substrat 30 par vissage sur un écrou 43 muni d'un joint 44.

On constate donc que l'on a, avec ce type de fixation, assuré le report du poids du feuilleté extérieur 31, 32, 33 sur le substrat intérieur 30 par une liaison longitudinale grâce à la partie rétrécie de l'écarteur 38 traversant le trou "borgne" du feuilleté extérieur. On a également assuré la fixation de l'ensemble du vitrage sur la structure par la vis fragmentée 34, 35 et l'écrou 43, tout en réglant la position de l'ensemble de la fixation par rapport au substrat intérieur 30. On remplit donc encore ici tous les objectifs que s'est fixée l'invention.

Mais ici un avantage substantiel supplémentaire se dégage : la feuille de verre extérieure 33 du feuilleté est dépourvue de toute pièce métallique, ce qui procure un meilleur aspect esthétique d'une part. Mais d'autre part, cela évite également tout risque de phénomène de pont thermique entre l'atmosphère extérieure et intérieure.

Une autre variante à peine différente de ce mode de réalisation consiste, préalablement à l'assemblage du feuilleté extérieur, à percer dans la feuille de polymère intercalaire 32 un trou circulaire puis dans la feuille 31 un autre trou circulaire, mais de diamètre un peu plus petit. Puis, lors de l'assemblage dudit feuilleté, on glisse au fond du trou une rondelle en matière plastique dont le diamètre est égal à celui de la feuille 32. On prévoit également avantageusement de munir cette rondelle d'une collerette dont le diamètre extérieur est celui du trou de la feuille 31, ce qui supprime l'utilité du joint 39 de la figure 5. Cette rondelle présente une ductilité suffisante pour garantir que la totalité de la surface porteuse du trou dans les feuilles 31, 32 travaille.

De cette manière, on peut alors adapter la forme de l'écarteur 38 de manière à ce qu'il y ait contact entre lui-même et le fond du trou, qui est cette fois non pas en verre mais muni de la rondelle en plastique.

Par rapport aux systèmes décrits dans les documents cités, la technique de l'invention permet de disposer d'une pièce destinée à relier un vitrage ou un panneau opaque d'une façade en "structural glazing" à la structure du bâtiment qui permet :
- dans le cas d'un panneau monolithique, de régler sa position dans son plan par rapport à la structure,
- dans le cas d'un vitrage - ou d'un panneau - multiple, de porter directement le poids de toutes les plaques au niveau de la pièce de liaison avec la structure,
- d'assurer le maintien sans jeu dans le plan du vitrage et la liaison à la structure porteuse des différents panneaux constitutifs du vitrage,
- d'autoriser dans la limite d'élasticité, souplesse ou jeu des bagues ou joints divers le débattement dans une direction perpendiculaire au plan du vitrage, notamment pour s'adapter aux variations de température, de pression, etc...
- de simplifier la fabrication du vitrage - ou du panneau - isolant, puisque le montage de la pièce sur le vitrage se fait complètement sur le chantier.

## Revendications

1. Système de liaison entre une plaque verticale (5, 30) d'un bâtiment et la structure porteuse, la plaque ayant des trous de fixation**, caractérisé en ce que** la position de la plaque dans son plan par rapport à ladite structure est réglable dans toutes les directions à l'aide d'un système d'excentriques comportant deux bagues circulaires excentrées (15, 16) disposées l'une dans l'autre dans chaque trou circulaire de fixation percé dans la plaque (5, 30).

2. Système de liaison selon la revendication 1, **caractérisé un ce qu'**une ou plusieurs autres plaques (4, 31) sont associées à la première (5, 30), **en ce que** le système est fixé rigidement à au moins l'une des plaques (4, 31) et **en ce que** sa position par rapport à au moins la première plaque (5, 30) est réglable dans le plan de celle-ci à l'aide des bagues excentrées (15, 16).

3. Système de liaison suivant la revendication 2, **caractérisé en ce que** les plaques constituent un vitrage multiple notamment double et que chaque trou circulaire percé dans celles-ci est préalablement étanchéifié.

4. Système de liaison suivant la revendication 2 ou 3, **caractérisé en ce que** les trous percés dans les plaques successives ont un diamètre croissant de l'extérieur vers l'intérieur du bâtiment.

5. Système de liaison suivant la revendication 4, **caractérisé en ce qu'**il comporte une vis (22) traversant la plaque extérieure (4) à laquelle elle est fixée rigidement par un écrou (21) dont le diamètre est au plus égal au diamètre du trou de la plaque intérieure (5), cet écrou supportant la plaque intérieure (5) grâce aux deux bagues circulaires excentrées (15, 16), le serrage s'effectuant par un contre-écrou (17) s'appuyant sur l'anneau d'étanchéité (6) des trous percés dans les plaques (4, 5).

6. Système de liaison suivant la revendication 5, **caractérisé en ce que** la vis (22) est munie d'une tête fraisée dont la surface extérieure est sensiblement au même niveau que la surface extérieure de la plaque extérieure (4).

7. Système de liaison suivant l'une des revendications 2 à 4, **caractérisé en ce qu'**il comporte une pièce interne (34, 35) segmentée en plusieurs parties longitudinalement qui, lorsqu'elles sont jointives, ont un encombrement extérieur au plus égal à la taille du trou de la plaque intérieure (30) permettant leur introduction entre les plaques (30, 31, 32, 33) et qui sont ensuite écartées les unes des autres et maintenues dans cette position par un écarteur (38), puis réglées par rapport à la plaque intérieure (30) et enfin serrées par rapport à cette même plaque (30) par une pièce externe.

8. Système de liaison suivant la revendication 7, **caractérisé en ce que** la pièce interne comprend deux parties (34, 35) qui, en position écartées, sont de révolution du côté intérieur du bâtiment et son équipées d'un pas de vis sur lequel se visse la pièce externe constituée d'un écrou (43), l'écarteur (38) étant lui-même de forme cylindrique et s'engageant de plus, sans jeu, dans un trou ménagé dans la plaque extérieure.

9. Système de liaison suivant la revendication 8, **caractérisé en ce que** l'écarteur (38) présente une cavité hémisphérique logeant la tête d'un rotule (40), dont le centre se situe approximativement dans le plan de symétrie de l'espace séparant la plaque extérieure (31, 32, 33) de la plaque intérieure (30).

10. Système de liaison suivant la revendication 8 ou 9, **caractérisé en ce que** la plaque extérieure (31, 32, 33) présente une structure feuilletée, le trou ménagé dans celle-ci n'étant percé que dans la feuille de verre intérieure (31) et la feuille de polymère intercalaire (32).

11. Vitrage équipé d'au moins un système de liaison selon l'une quelconque des revendications 1 à 10.

12. Vitrage selon la revendication 11, **caractérisé en ce que** les différentes plaques qui le constituent sont solidarisées avec- une structure porteuse de bâtiment de façon rigide dans toutes les directions contenues dans un plan parallèle au vitrage.

13. Vitrage selon l'une des revendications 11 ou 12, **caractérisé en ce que** les différentes plaques qui le constituent sont solidarisées avec une structure porteuse de bâtiment de façon à autoriser un débattement dans des directions perpendiculaires au vitrage.

## Patentansprüche

1. Verbindungssystem für eine Befestigungslöcher enthaltende senkrechte Platte (5, 30) eines Gebäudes mit dessen tragender Konstruktion, **dadurch gekennzeichnet, daß** die Position der Platte in ihrer Ebene bezüglich dieser Konstruktion in sämtlichen Richtungen mittels eines Exzentersystems einstellbar ist, das zwei exzentrische kreisrunde Ringe (15, 16) umfaßt, die in jedem kreisrunden Befestigungsloch ineinander angeordnet sind, das in der Platte (5, 30) vorgesehen ist.

2. Verbindungssystem nach Anspruch 1, **dadurch gekennzeichnet, daß** eine oder mehrere andere Platten (4, 31) mit der ersten (5, 30) verbunden sind, **daß** das System an wenigstens einer der Platten (4, 31) starr befestigt ist **und daß** seine Position mittels exzentrischer Ringe (15, 16) in bezug auf wenigstens die erste Platte (5, 30) in deren Ebene einstellbar ist.

3. Verbindungssystem nach Anspruch 2, **dadurch gekennzeichnet, daß** die Platten eine Mehrfach- und insbesondere eine Doppelverglasung bilden und **daß** jedes in sie hineingebohrte kreisrunde Loch zuvor abgedichtet worden ist.

4. Verbindungssystem nach Anspruch 2 oder 3, **dadurch gekennzeichnet, daß** der Durchmesser der in die aufeinander folgenden Platten gebohrten Löcher von der Außen- zur Innenseite des Gebäudes zunimmt.

5. Verbindungssystem nach Anspruch 4, **dadurch gekennzeichnet, daß** es eine Schraube (22) enthält, die durch die Außenplatte (4) hindurchführt, an welcher sie mittels einer Mutter (21) starr befestigt ist, deren Durchmesser höchstens gleich dem Durchmesser des Loches der Innenplatte (5) ist, wobei diese Mutter mit zwei exzentrischen kreisrunden Ringen (15, 16) die Innenplatte (5) trägt und die Verschraubung durch eine Kontermutter (17) realisiert wird, die sich an den Dichtungsring (6) der in die Platten (4, 5) gebohrten Löcher anpreßt.

6. Verbindungssystem nach Anspruch 5, **dadurch gekennzeichnet, daß** die Schraube (22) mit einem Senkkopf versehen ist, dessen Außenfläche sich im wesentlichen auf demselben Niveau wie die Außenfläche der Außenplatte (4) befindet.

7. Verbindungssystem nach einem der Ansprüche 2 bis 4, **dadurch gekennzeichnet, daß** es ein Innenteil (34, 35) enthält, das in mehrere Teile längs unterteilt ist, die, wenn sie aneinander stoßen, einen äußeren Raumbedarf besitzen, der höchstens gleich der Größe des Lochs der Innenplatte (30) ist, was ihren Einbau zwischen den Platten (30, 31, 32, 33) erlaubt, und die anschließend voneinander entfernt, in dieser Position von einem Abstandshalter (38) gehalten, danach in bezug auf die Innenplatte (30) eingestellt und schließlich durch ein Außenteil in bezug auf diese Platte (30) verschraubt werden.

8. Verbindungssystem nach Anspruch 7, **dadurch gekennzeichnet, daß** das Innenteil zwei Teile (34, 35) umfaßt, die in beabstandeter Position auf der Gebäudeinnenseite drehbar und mit einem Gewindegang versehen sind, auf welchen ein Außenteil geschraubt wird, das aus einer Mutter (43) besteht, wobei der Abstandshalter (38) seinerseits eine zylindrische Form besitzt und außerdem ohne Spiel in ein Loch eingreift, das in der Außenplatte angebracht ist.

9. Verbindungssystem nach Anspruch 8, **dadurch gekennzeichnet, daß** der Abstandshalter (38) einen halbkugelförmigen Hohlraum aufweist, welcher den Kopf eines Kugelgelenks (40) aufnimmt, dessen Zentrum sich etwa in der Symmetrieebene des Zwischenraumes befindet, der die Außenplatte (31, 32, 33) von der Innenplatte (30) trennt.

10. Verbindungssystem nach Anspruch 8 oder 9, **dadurch gekennzeichnet, daß** die Außenplatte (31, 32, 33) einen Verbundaufbau besitzt, wobei das in ihr angebrachte Loch nur in die innere Glasscheibe (31) und die Kunststoffzwischenfolie (32) gebohrt worden ist.

11. Verglasung, die mit wenigstens einem Verbindungssystem nach einem der Ansprüche 1 bis 10 ausgestattet ist.

12. Verglasung nach Anspruch 11, **dadurch gekennzeichnet, daß** die sie bildenden unterschiedlichen Platten in sämtlichen Richtungen, die in einer zur Verglasung parallelen Ebene enthalten sind, mit einer tragenden Gebäudekonstruktion starr verbunden sind.

13. Verglasung nach Anspruch 11 oder 12, **dadurch gekennzeichnet, daß** die sie bildenden unterschiedlichen Platten derart mit einer tragenden Gebäudekonstruktion verbunden sind, daß eine Bewegung in zur Verglasung senkrechten Richtungen möglich ist.

## Claims

1. Connection system between a vertical plate (5, 30) of a building and the supporting structure, the plate having fixing holes, characterized in that the position of the plate in its plane relative to said structure is adjustable in all directions by means of a system of eccentrics, comprising two eccentric circular rings (15, 16) disposed the one inside the other in a circular fixing hole formed in the plate (5, 30).

2. Connection system according to Claim 1, characterized in that one or more other plates (4, 31) are associated with the first (5, 30), in that the system is rigidly fixed to at least one of the plates (4, 31) and in that its position relative to at least the first plate (5, 30) is adjustable in the plane of that plate by means of the eccentric rings (15, 16).

3. Connection system according to Claim 2, characterized in that the plates constitute a multiple glazing unit, notably double glazing unit, and that each circular hole perforated in them is previously made leak-tight.

4. Connection system according to Claim 2 or 3, characterized in that the holes formed in the successive plates have a diameter increasing from the outside towards the inside of the building.

5. Connection system according to Claim 4, characterized in that it comprises a screw (22), passing through the outer plate (4), to which it is fixed rigidly by a nut (21) having a diameter at most equal to the diameter of the hole in the inner plate (5), this nut supporting the inner plate (5) by means of the two circular eccentric rings (15, 16), the tightening being effected by a locknut (17), bearing against the sealing ring (6) of the holes formed in the plates (4, 5).

6. Connection system according to Claim 5, characterized in that the screw (22) is provided with a milled head, the outer surface of which is substantially at the same level as the outer surface of the outer plate (4).

7. Connection system according to one of Claims 2 to 4, characterized in that it comprises an internal component (34, 35), segmented into several parts longitudinally which, when they are close together, have an external size at most equal to the size of the hole in the inner plate (30), thus allowing them to be introduced between the two plates (30, 31, 32, 33), which parts are then separated from each other and kept in this position by a separator (38), and then adjusted relative to the inner plate (30) and finally tightened relative to this same plate (30) by an external component.

8. Connection system according to Claim 7, characterized in that the internal component comprises two parts (34, 35) which, in the separated position, form a surface of revolution at the end towards the interior of the building and are provided with a screw thread, onto which the external component is screwed, this external component being composed of a nut (43), the separator (38) being itself of cylindrical shape and also engaging, without play, into a hole formed in the outer plate.

9. Connection system according to Claim 8, characterized in that the separator (38) has a hemispherical cavity seating the head of a ball joint (40), the centre of which is situated approximately in the plane of symmetry of the space separating the outer plate (31, 32, 33) from the inner plate (30).

10. Connection system according to Claim 8 or 9, characterized in that the outer plate (31, 32, 33) has a laminated structure, the hole formed in it being formed only in the inner glass sheet (31) and the intermediate polymer sheet (32).

11. Glazing equipped with at least one connection system according to any one of Claims 1 to 10.

12. Glazing according to Claim 11, characterized in that the various plates of which it is composed are fixed to a building load-bearing structure rigidly in all the directions contained in a plane parallel to the glazing.

13. Glazing according to one of Claims 11 or 12, characterized in that the various plates of which it is composed are fixed to a building load-bearing structure in such a way as to permit a displacement in directions perpendicular to the glazing.
